# EUROPÄISCHE PATENTANMELDUNG

(11) **EP 3 501 803 A1**
(43) Veröffentlichungstag der Anmeldung: **26.06.2019**
(21) Anmeldenummer: 18156730.6
(22) Anmeldetag: 14.02.2018
(51) Int. Cl.: B29C 65/16, B29K 101/12, B29L 23/00

(54) **HANDLASERWERKZEUG**

(30) Priorität: 21.12.2017 EP 17209281
(71) Anmelder: Leister Technologies AG, 6056 Kägiswil (CH)
(72) Erfinder: Rauschenberger, Jens, 6024 Hildisrieden (CH); Franke, Alexander, 6064 Kerns (CH)
(74) Vertreter: Klocke, Peter

(57) **Zusammenfassung**

Handlaserwerkzeug zum miteinander Verschweißen von thermoplastischen Kunststoffrohren, mit einem Werkzeuggehäuse (2) mit zwei aneinander gegenüber beweglich festgelegten Schalenteilen (3, 4), die im geöffneten Zustand die zu verschweißenden Kunststoffrohre wenigstens teilweise umgreifend anordenbar sind und im geschlossenen Zustand eine die Kunststoffrohre aufnehmende durch die Schalenteile (3, 4) geformte Durchtrittsöffnung (5) aufweisen, und wenigstens einer im Bereich der Schalenteile (3, 4) angeordneten laserbasierenden Schweißeinrichtung (6), die mindestens ein optisches Strahlformungs- und/oder Strahlumlenkungselement (7, 8) zum Formen bzw. Umlenken von zugeführten Laserstrahlen (9) aufweist, wobei die geformten und/oder umgelenkten Laserstrahlen (9) die zu verschweißenden Kunststoffrohre mit einem vorgebbaren Strahlprofil simultan oder rotierend beaufschlagen, und mit mindestens einem an dem Werkzeuggehäuse (2) befindlichen Handgriff (10). (Fig. 1)

## Beschreibung

Die Erfindung betrifft ein Handlaserwerkzeug zum Verschweißen von thermoplastischen Kunststoffrohren.

Das Verbinden der Enden von Rohren im Orbitalschweißverfahren ist aus dem Stand der Technik seit langem bekannt. Dabei werden die aneinander stoßenden oder sich überlappenden Rohrenden von zueinander ausgerichteten Rohren mittels unterschiedlichen Schweißverfahren, wie beispielsweise Laserdurchstrahlschweißen, Laser-Lichtbogenschweißen in Hybridtechnik oder Lichtbogenschweißen miteinander zu Rohrleitungen verbunden. Auf diese Weise können z.B. Rohre mit Wanddicken von 2 bis 20 mm und Durchmesser von 60 bis 1600 mm miteinander verschweißt werden. Zum Stand der Technik wird beispielhaft auf die Druckschriften DE 103 34 446 A1, WO 2005/056 230 A1 und DE 10 2012 007 563 B3 verwiesen. Diese offenbaren Orbitalschweißvorrichtungen, vorzugsweise zum Verschweißen von Stahlrohren, mit denen eine 360°- Rundschweißnaht ausgeführt werden kann. Diese sind prinzipiell auch zum endseitigen Verbinden von Kunststoffrohren geeignet.

Rohrleitungen in Flugzeugen, Schiffen und Hausinstallationen werden aus Gewichts- und Kostengründen zunehmend aus Kunststoffen statt Metallwerkstoffen gefertigt. Bei erhöhten Anforderungen an die Qualität und Zuverlässigkeit der Rohrverbindungen bietet sich das Verschweißen mittels Laser an. Das Verbinden der Rohre im verbauten Zustand erfordert eine mobile Vorrichtung, die die Laserstrahlung simultan oder sequentiell auf den Rohrumfang richtet. Die aus dem Stand der Technik bekannten Vorrichtungen sind aufwändig an den Rohren zu befestigen, um eine Schweißnaht hoher Güte zu erreichen. Damit erfüllen diese nicht die Anforderungen hinsichtlich einer hohen Wirtschaftlichkeit sowie einer flexiblen Nutzung.

Davon ausgehend liegt der Erfindung die Aufgabe zugrunde, eine Möglichkeit vorzuschlagen, mit der ein einfaches manuelles, jedoch teilautomatisiertes Schweißverfahren möglich ist, das zum Verbinden von Rohren bis ca. 10 cm Rohrdurchmesser eine einfache Handhabung auch bei schlecht zugänglichen Rohrleitungen erlaubt und die Anforderungen hinsichtlich Qualität und Wirtschaftlichkeit erfüllt.

Diese Aufgabe wird erfindungsgemäß durch ein Handlaserwerkzeug mit den Merkmalen des unabhängigen Patentanspruchs 1 gelöst. Weitere vorteilhafte Ausgestaltungen der Erfindung sind den rückbezogenen Patentansprüchen zu entnehmen.

Kerngedanke der Erfindung ist es, ein handführbares, mit einem Handgriff versehenes Handlaserwerkzeug zu schaffen, das einschenklig oder zweischenklig ausgeführt und mindestens zwei die Rohre aufnehmende Schalenteile umfasst, von denen wenigstens eines eine laserbasierende Schweißeinrichtung aufweist, wobei die Schalenteile um eine Schwenk- oder Drehachse einander gegenüber derart lageveränderlich angeordnet sind, dass die Schalenteile und die Rohre senkrecht zueinander zusammenführbar sind.

Das Handlaserwerkzeug kann nicht nur von Hand geführt werden, sondern auch von einem Schweißroboter. Es wäre dann Teil einer stationären oder mobilen Maschine.

Das erfindungsgemäße Handlaserwerkzeug zum miteinander Verschweißen von thermoplastischen Kunststoffrohren weist ein Werkzeuggehäuse mit zwei einander gegenüber beweglich festgelegten Schalenteilen auf, die im geöffneten Zustand in zu verschweißenden Kunststoffrohre wenigstens teilweise umgreifend anordenbar sind und im geschlossenen Zustand eine die Kunststoffrohre aufnehmende, durch die Schalenteile geformte Durchtrittsöffnung begrenzen. Erfindungsgemäß weist das Handlaserwerkzeug wenigstens eine im Bereich der Schalenteile angeordnete laserbasierende Schweißeinrichtung auf, die mindestens ein optisches Strahlformungs- und/oder Strahlumlenkungselement zum Formen bzw. Umlenken von zugeführten Laserstrahlen umfasst, wobei die geformten und/oder umgelenkten Laserstrahlen die zu verschweißenden Kunststoffrohre mit einem vorgebbaren Strahlprofil simultan oder rotierend beaufschlagen und an dem Werkzeuggehäuse des Handlaserwerkzeuges ein Handgriff zum Führen des Handlaserwerkzeuges vorgesehen ist. Das mindestens eine optische Strahlformungs- und/oder Strahlumlenkungselement beinhaltet je nach Ausbildung der Schweißeinrichtung beispielsweise optische Linsen, Strahlteiler, Umlenkspiegel. Dabei kann der dem Strahlformungs- bzw. Strahlumlenkungselement zugeführte Laserstrahl von einer Laserquelle ausgehen, die in oder an den Schalenteilen oder abgesetzt von diesen je nach erforderlicher Leistung im Werkzeuggehäuse oder fern vom Werkzeuggehäuse angeordnet ist. Falls die Laserquelle entfernt von dem optischen Strahlformungs- bzw. Strahlumlenkungselement angeordnet ist, so wird diesen der Laserstrahl vorzugsweise über einen Lichtwellenleiter vorzugsweise einen Glasfaserleiter zugeführt. Die Schweißeinrichtung selbst kann als Schweißeinrichtung mit je einer Gruppe von optischen Linsen, Strahlteiler und Umlenkspiegel in jedem Schalenteil, denen je ein Laserstrahl zugeführt wird oder eine Vielzahl von einzelnen Laseremittern aufweisend ausgebildet sein. Auch ist es möglich, mittels einer in einem Schalenteil um 360° oder mehr bewegten Laserquelle oder mittels einem bewegten Faserende einer Entfernung von dem Handwerkzeug befindlichen Laserquelle die Verschweißung durchzuführen. Der Handgriff kann sich dabei in Richtung des Werkzeuggehäuses oder quer dazu erstrecken und seitlich über das Gehäuse vorstehen oder in dieses versenkt sein. Es kann für das Verschweißen von sich stumpf stoßenden oder ineinander eingreifenden Rohrenden gleichermaßen verwendet werden.

Bei einer bevorzugten Ausführungsform der Erfindung weist jedes der Schalenteile des Handlaserwerkzeuges zumindest eine laserbasierende Schweißeinrichtung auf, die gegenüber dem jeweiligen Schalenteil feststehend ausgebildet ist, wobei jede laserbasierende Schweißeinrichtung ein, vorzugsweise mehrere, optische Strahlformungs- und/oder Strahlumlenkungselemente umfasst, die im geschlossenen Zustand der Schalenteile gleichmäßig über den Umfang der Durchtrittsöffnung verteilt angeordnet sind und die die Kunststoffrohre mit je einem Laserstrahl radial beaufschlagen. Diese spezielle Ausführungsform des erfindungsgemäßen Handlaserwerkzeuges ermöglicht eine simultane Verschweißung der thermoplastischen Kunststoffrohre.

Bei einer anderen vorteilhaften Ausführungsform der Erfindung weist nur eines der Schalenteile eine statische laserbasierende Schweißeinrichtung auf, die vorzugsweise optische Strahlformungs- und/oder Strahlumlenkungselemente umfasst, die im geschlossenen Zustand der Schalenteile um die Durchtrittsöffnung rotierbar angeordnet sind und die die Kunststoffrohre mit einem Laserstrahl radial beaufschlagen. Diese besondere Ausführungsform des erfindungsgemäßen Handlaserwerkzeuges ermöglicht die sequentielle orbitale Verschweißung der thermoplastischen Kunststoffrohre. Dabei kann der Laserstrahl ein oder mehrmals um die Kunststoffrohre herumgeführt werden, wobei beim mehrfachen Herumführen dies auch abwechselnd in entgegengesetzten Richtungen erfolgen kann.

Bei einer bevorzugten Ausführungsform der Erfindung ist an dem Werkzeuggehäuse eine Drucklufteinrichtung zur Kühlung der zu verschweißenden Rohre, der Laserquellen und/oder der optischen Elemente anschließbar, wobei in dem Werkzeuggehäuse Leitkanäle und Leitflächen zur Führung der Druckluft zu den zu kühlenden Stellen angeordnet sind. Dies ermöglicht ein Verschweißen der thermoplastischen Kunststoffrohre mit hoher Leistung, ohne dass die Kunststoffrohre, die mindestens eine Laserquelle und/oder die optischen Elemente zur Strahlenformung und/oder Strahlumlenkung Schaden leiden. Das Werkzeuggehäuse besteht vorzugsweise aus gut wärmeleitenden Material und bildet eine Wärmesenke. Es wird vorzugsweise durch eine Luftströmung gekühlt, wobei auch andere Kühlmaßnahmen alternativ oder zusätzlich anwendbar sind. Mit dem Gehäuse wird auch der daran befindliche Handgriff gekühlt, so dass das Laserhandwerkzeug von dem Benutzer ohne Einschränkungen oder Verletzungsgefahr längere Zeit benutzt werden kann.

Vorzugsweise weist das erfindungsgemäße Handlaserwerkzeug eine in dem Werkzeuggehäuse angeordnete Steuer- und Regelungseinrichtung sowie Betätigungselemente an dem Werkzeuggehäuse, vorzugsweise im Handgriff auf, mittels denen über übliche mechanische und oder elektromechanische Einrichtungen im Werkzeuggehäuse es möglich ist, die Schalenteile zu schließen, und nach dem durchgeführten Schweißvorgang die Schalenteile wieder zu öffnen und die zu verschweißenden Kunststoffrohre freizugeben. Über die Steuer- und Regeleinrichtung werden die zu verschweißenden Kunststoffrohre mit dem vorgebbaren Strahlprofil simultan oder rotierend beaufschlagt. Mit Strahlprofil ist hier nicht die räumliche Leistungsverteilung des Laserstrahls gemeint, sondern der zeitliche Verlauf der Laserleistung oder des Diodenstromes beim Schweißen. Außerdem ermöglicht dies ein automatisiertes Schweißverfahren, bei dem der mindestens eine Laserstrahl maschinell ohne Unterbrechung die Rohre um 360° simultan beaufschlagt oder ein oder mehrere Male sequentiell um 360° um die Rohre herumgeführt wird. Vorzugsweise sind dabei in dem Werkzeuggehäuse Messeinrichtungen zur Prozesskontrolle angeordnet und mit der Steuer- und Regeleinrichtung verbunden.

Bei einer vorteilhaften Ausführungsform des erfindungsgemäßen Handlaserwerkzeuges formt das mindestens eine in dem Schalenteil angeordnete Strahlenformungs- und/oder Strahlumlenkungselement den jeweils von einer Laserquelle emittierten Laserstrahl vorzugsweise linienförmig und lenkt diesen auf die dem jeweiligen Schalenteil zugewandten Flächen der zu verschweißenden Kunststoffrohre ohne oder mit in einem Grenzbereich definierter Überlappung. Dies gilt sowohl für das simultane wie auch für die das sequentielle automatisierte Schweißverfahren. Die definierte Überlappung auf den dem jeweiligen Schalenteil zugewandten Flächen der zu verschweißenden Kunststoffrohre ist abhängig von dem Durchmesser und der Wandstärke der Kunststoffrohre. Bevorzugt wird dabei eine Ausführungsform, bei der das mindestens eine Strahlformungs- und Strahlumlenkungselement mit der jeweiligen Laserquelle fasergekoppelt ist. Die Laserstrahlung wird bei allen Ausführungsformen der Erfindung vorzugsweise zumindest den beweglichen Schalenteilen zugeführt. Dabei wird das von der Laserquelle ausgehende Laserlicht zunächst über eine biegesteife Glasfaser geleitet und dann nahe dem beweglichen Schalenteil in eine flexible Glasfaser umgekoppelt, die zum Schalenteil führt. Die flexible Glasfaser wird vorzugsweise über eine Spanneinrichtung in einer vorgegebenen Position gehalten.

Vorzugsweise weisen bei einer Ausführungsform des Handlaserwerkzeuges die beiden Schalenteile eine Schalenteilbacke auf, wobei ein erstes Schalenteil und seine Schalenteilbacke gegenüber dem Handgriff feststehend ist und das andere zweite Schalenteil und seine Schalenteilbacke um bis zu vorzugsweise 60 bis 90° gegenüber dem ersten Schalenteil und seiner Schalenteilbacke verschwenkbar ausgebildet ist, wobei die beiden Schalenteilbacken einander diametral gegenüberliegend angeordnet sind. Damit ist das erfindungsgemäße Handlaserwerkzeug zangenförmig ausgebildet, wobei der Handgriff einen Zangenhebel bildet an dem das erste Schalenteil angeordnet ist und das zweite Schalenteil entweder an einem zweiten mit dem Werkzeuggehäuse schwenkbeweglich verbundenen zweiten Zangenhebel oder direkt an dem Werkzeuggehäuse schwenkbeweglich festgelegt ist. Bei einem vorhandenen zweiten Zangenhebel können die Schalenteile vom Benutzer manuell, ansonsten nur über eine in dem Gehäuse angeordnete Schließvorrichtung so zueinander positioniert werden, dass die Schalenteile eine geschlossene Durchtrittsöffnung für die Kunststoffrohre bilden.

Bei einer bevorzugten Ausführungsform dieser Variante sind an dem ersten und dem zweiten Schalenteil, die einander gegenüber verschwenkbar sind, mindestens je zwei Laserquellen sowie mindestens je ein zugehöriges Strahlformungs- und/oder Strahlumlenkungselement angeordnet, wobei der jeweilige Laserstrahl der Laserquelle zunächst direkt oder fasergekoppelt auf das im Bereich des Schalenteilmauls der Schalenteile angeordnete mindestens eine Strahlformungs- und/oder Strahlumlenkungselement fällt. Die Laserstrahlen sind dann jeweils hinter dem mindestens einen Strahlformungs- und/oder Strahlumlenkungselement auf die Kunststoffrohre vorzugsweise mit in einem Grenzbereich definierte Überlappung gerichtet. Günstigerweise sind bei einer Variante davon, die Laserquelle und das mindestens eine zugehörige Strahlformungs- und/oder Strahlumlenkungselement zu einer Einheitszelle zusammengeführt, wobei die Einheitszellen in der Umfangsrichtung der Durchtrittsöffnung fortlaufend angeordnet sind. Dies ermöglicht eine besonders einfache und effiziente sowie kostengünstige Ausführungsform des erfindungsgemäßen Handlaserwerkzeuges.

Bei einer anderen bevorzugten Ausführungsform des erfindungsgemäßen Handlaserwerkzeuges weisen die beiden Schalenteile ein Schalenteilmaul auf, wobei ein erstes Schalenteil und sein Schalenteilmaul gegenüber dem Handgriff feststehend sind und das andere zweite Schalenteil und sein Schalenteilmaul gegenüber dem ersten Schalenteil und seinem Schalenteilmaul drehbeweglich angeordnet ist, wobei die beiden Schalenteilmäuler seitlich nebeneinander angeordnet sind und das zweite Schalenteil und sein Schalenteilmaul gegenüber dem ersten Schalenteil und seinen Schalenteilmaul um mindestens 360° rotierbar ausgebildet sind.

Eine vorteilhafte Weiterbildung dieser Ausführungsform sieht vor, dass das erste Schalenteil als Gabelkopf-Schalenteil mit zwei Gabelkopf-Schalenteilsegmenten ausgebildet ist, die je ein Schalenteilmaul aufweisen, wobei das Gabelkopf-Schalenteil und seine Schalenteilmäuler gegenüber dem Handgriff feststehend sind und das andere zweite Schalenteil und sein Schalenteilmaul zwischen den beiden Gabelkopf-Schalenteilsegmenten angeordnet sind, wobei sich die drei Schalenteilmäuler seitlich nebeneinander angeordnet erstrecken. Das Kabelkopf-Schalenteil und seine Schalenteilmäuler sind gegenüber dem Handgriff feststehend. Das andere zweite Schalenteil und sein Schalenteilmaul sind gegenüber dem Gabelkopf-Schalenteil und seinen Schalenteilmäulern um mindestens 360° rotierbar ausgebildet ist.

Dabei ist bei den beiden vorstehend beschriebenen Varianten an dem Schalenteilmaul des zweiten Schalenteils, das gegenüber dem ersten Schaltenteil rotierbar ist, eine Laserquelle sowie mindestens ein Strahlformungs- und/oder Strahlumlenkungselement angeordnet, wobei der Laserstrahl senkrecht auf die Kunststoffrohre gerichtet ist. Der Laserquelle wird die Betriebsspannung günstigerweise über eine flexible Stromleitung zugeführt, die vorzugsweise über eine Spanneinrichtung in einer vorgegebenen Position gehalten ist. Zum Umfassen der Rohre muss das Schalenteilmaul des mittleren beweglichen Schalenteils gegenüber den angrenzenden Schalenteilmäulern des Gabelkopf-Schalenteil derart positioniert werden, dass ein durchgehender Einführspalt gebildet ist.

Bei dem vorgeschlagenen Handlaserwerkzeug handelt es sich um ein mobiles Kunststoffschweißgerät, das handführbar ist und mit dem nach dem Anlegen an die zu verbindenden Kunststoffrohre ein automatisierter Laserschweißvorgang durchführbar ist. Der Schweißvorgang kann nur gestartet werden, d.h. der Laser aktiviert werden, wenn die Durchtrittsöffnung der beiden Schalenteile geschlossen ist und zudem zu verschweißende Rohre darin aufgenommen sind. Das Werkzeug ist für unterschiedliche Rohrdurchmesser und Wandstärken einsetzbar bzw. daran mittels zugehöriger Adapterstücke anpassbar. Seine Größe und sein Gewicht sind derart bemessen, dass ein ermüdungsfreies Arbeiten über einen längeren Zeitraum möglich ist. Das Strahlprofil, mit dem die Kunststoffrohre beaufschlagt werden, ist vorgebbar bzw. veränderbar, so dass das Handlaserwerkzeug universell für die unterschiedlichsten thermoplastischen Kunststoffrohre einsetzbar ist.

Die vorstehend in der Beschreibung genannten Merkmale und Merkmalskombinationen, sowie die nachfolgend in der Figurenbeschreibung genannten und/oder in den Figuren allein gezeigten Merkmale und Merkmalskombinationen sind nicht nur in der jeweils angegebenen Kombination, sondern auch in anderen Kombinationen oder in Alleinstellung verwendbar Zur Ausführung der Erfindung müssen nicht alle Merkmale des Anspruchs 1 verwirklicht sein. Auch können einzelne Merkmale der unabhängigen oder nebengeordneten Ansprüche durch andere offenbarte Merkmale oder Merkmalskombinationen ersetzt werden.

Sämtliche aus den Ansprüchen, der Beschreibung oder der Zeichnung hervorgehenden Merkmale und/oder Vorteile, einschließlich konstruktive Einzelheiten, räumliche Anordnung und Verfahrensschritte können sowohl für sich als auch in den verschiedensten Kombinationen erfindungswesentlich sein. In den Figuren werden gleiche oder ähnliche Bauteile mit gleichen oder ähnlichen Bezugszeichen gekennzeichnet.

Nachfolgend wird die Erfindung anhand mehrerer in der Zeichnung dargestellten Ausführungsbeispielen näher erläutert. Es zeigen in einer schematischen Darstellung:
- Figur 1: ein erfindungsgemäßes Handlaserwerkzeug, das zangenartig ausgebildet ist und dessen beide Schalenteile eine Schalenteilbacke umfassen, in Seitenansicht;
- Figur 2: eine erste Ausführungsform der Schalenteilbacke aus Figur 1 mit integrierter Laserquelle, die eine Anzahl von Laserdioden und Strahlformungselemente aufweist, die in Umfangsrichtung gleichmäßig verteilt angeordnet sind und den Laserstrahl senkrecht auf die Rohre richten, in Querschnittsdarstellung;
- Figur 3: die Schalenteilbacke aus Figur 2 in Längsschnittdarstellung;
- Figur 4: eine zweite Ausführungsform der Schalenteilbacke aus Figur 1 mit abgesetzter Laserquelle, die eine Anzahl von Strahlformungs- und Strahlumlenkungselemente aufweist, die den zugeführten Laserstrahl aufteilen und mit Überlappung auf die Rohre projizieren, in Längsschnittdarstellung;
- Figur 5: ein erfindungsgemäßes Handlaserwerkzeug, das doppelklauenförmig ausgebildet ist, wobei die beiden Schalenteile ein Schalenteilmaul aufweisen und an einem der Schalenteile eine Laserquelle, Strahlformungs- und Strahlumlenkelemente angeordnet sind, in perspektivischer Darstellung;
- Figur 6: ein erfindungsgemäßes Handlaserwerkzeug ähnlich der Figur 5, wobei eines der beiden Schalenteile als Gabelkopf-Schalenteil ausgebildet ist und das andere Schalenteil mit der Laserquelle, den Strahlformungs- und den Strahlumlenkelementen zwischen den Gabelkopf-Schalenteilsegmenten angeordnet ist, in perspektivischer Darstellung; und
- Figur 7: das Schalenteil mit der Laserquelle, den Strahlformungs- und dem Strahlumlenkungselement aus den Figuren 4 und 5, in Längsschnittdarstellung.

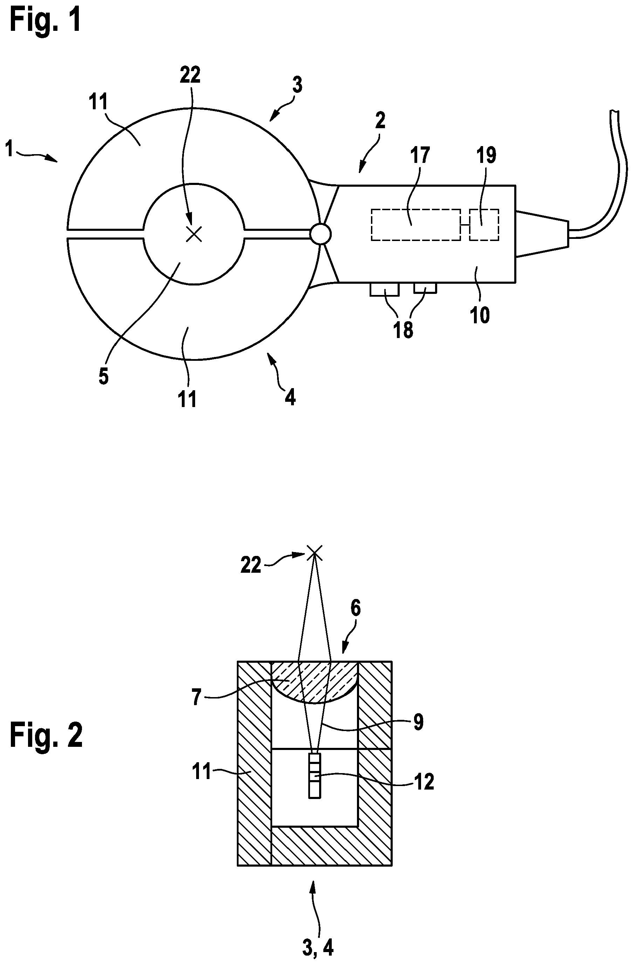

Die Figuren 1, 5 und 6 zeigen unterschiedliche Ausführungsformen des erfindungsgemäßen Handlaserwerkzeug 1 zum miteinander Verschweißen von in der Zeichnung nicht dargestellten thermoplastischen Kunststoffrohren. Das jeweilige Handlaserwerkzeug 1 weist ein Werkzeuggehäuse 2 mit zwei aneinander gegenüber beweglich festgelegten Schalenteilen 3, 4, die im geöffneten Zustand die zu verschweißenden Kunststoffrohre wenigstens teilweise umgreifend anordenbar sind. Im geschlossenen Zustand der Schalenteilen 3, 4 ist eine die Kunststoffrohre aufnehmende durch die Schalenteile geformte Durchtrittsöffnung 5 gebildet. Diese ist entweder an den Rohrdurchmesser der zu verschweißenden Rohre angepasst oder es wird bei kleineren Rohren eine Zentrierung der zu verschweißenden Rohre vorgenommen. Im Bereich wenigstens eines der Schalenteile 3, 4 ist, wie die Figuren 2 - 4, 7 zeigen, eine laserbasierende Schweißeinrichtung 6 angeordnet, die mindestens ein optisches Strahlformungs- und/oder Strahlumlenkungselement 7, 8 zum Formen bzw. Umlenken von zugeführten Laserstrahlen 9 aufweist, wobei die geformten und/oder umgelenkten Laserstrahlen 9 die zu verschweißenden Kunststoffrohre mit einem vorgebbaren Strahlprofil simultan oder rotierend beaufschlagen. Das Werkzeuggehäuse 2 ist mit einem Handgriff 10 ausgebildet, wobei der Handgriff 10 an einem der Schalenteile 3, 4 angebracht ist. Die Schalenteilen 3, 4 sind daher unterschiedlich ausgebildet, wohingegen die Schalenteilbacken 11 je nach Schweißprinzip gleich ausgebildet sein können. Das Laserhandwerkzeug ist in der Größe bis zu ca. 10 cm Rohrdurchmesser skalierbar.

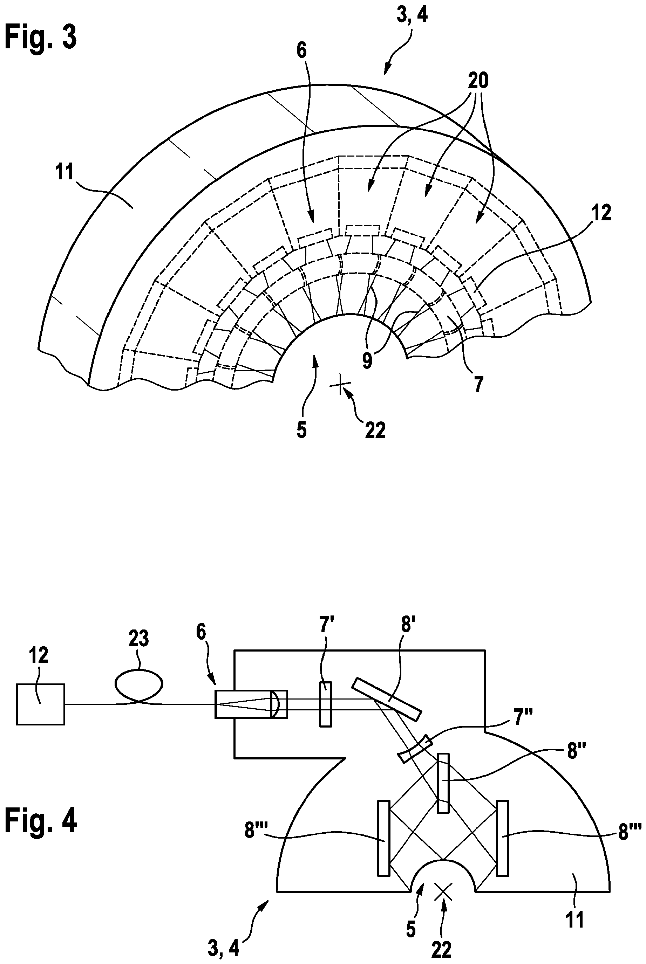

Bei der in der Figur 1 dargestellten Ausführungsform weisen die beiden Schalenteile 3, 4 je eine Schalenteilbacke 11 auf, wobei das erste Schalenteil 3 und seine Schalenteilbacke 11 gegenüber dem Handgriff 10 feststehend sind und das andere zweite Schalenteil 4 und seine Schalenteilbacke 11 um bis zu vorzugsweise 60 -90° gegenüber dem ersten Schalenteil 3 und seiner Schalenteilbacke 11 verschwenkbar ausgebildet ist. Die Schalenteilbacken 11 der beiden Schalenteile 3, 4 sind einander diametral gegenüberliegend angeordnet. Jedes der Schalenteile 3, 4 des Handlaserwerkzeuges 1 weist zudem zumindest eine laserbasierende Schweißeinrichtung 6 auf, die gegenüber dem jeweiligen Schalenteil 3, 4 feststehend ausgebildet ist. Die Schalenteile 3, 4 enthalten Einrichtungen zur Erkennung der Anwesenheit von Bauteilen (Rohren), beinhalten die Strahlungserzeugung und Kühlung und sorgen für eine Abschirmung von Streulicht. Es ist aber auch möglich, auf eine Abschirmung zu verzichten, je nach Laserschutzklasse und/oder Einsatzort. Wie die Figuren 2, 3 verdeutlichen, umfasst jede der laserbasierende Schweißeinrichtung 6 vorzugsweise mehrere optische Strahlformungs- und/oder Strahlumlenkungselemente 7, 8, die im geschlossenen Zustand der Schalenteile 3, 4 gleichmäßig über den Umfang der Durchtrittsöffnung 5 verteilt angeordnet sind und die nicht abgebildeten Kunststoffrohre mit je einem vorzugsweise linienförmig geformtem Laserstrahl simultan radial beaufschlagen, die sich auf den Rohren überlappen.

Dabei gehen die Laserstrahlen 11 von Laserquellen 12 aus, die in die Schalenteile 3 und 4 integriert sind. Die Figuren 2, 3 zeigen eine Variante, bei der eine Vielzahl von Single-Emittern als Laserquellen 12 in Folge streifenförmig in Umfangsrichtung um die Durchtrittsöffnung 5 angeordnet sind. Diese besitzen eine typische optische Ausgangsleistung von um die 8 bis 12 Watt, die einen linienförmigen in der fast-axis-Richtung (FAC-Richtung) um etwa 25 Grad Halbwertsbreite aufgefächerten Laserstrahl 9 erzeugen. Die Intensitätsverteilung der Laserstrahlung ist in der fast-axis-Richtung nahezu gaußförmig, wobei für eine optimale geringe Welligkeit der Summe der Intensität der einzelnen gaußförmigen Intensitätsverteilung des abgestrahlten Laserstrahls eine Überlappung von benachbarten Einheitszellen +/-5 % beträgt.. Die Laserquellen 12 sind derart ausgerichtet, dass der abgestrahlte Laserstrahl zum Mittelpunkt 22 der Durchtrittsöffnung 5 gerichtet ist. Den Laserquellen 12 mit Abstand nachgeschaltet ist ein Abbildungselement als Strahlformungselement 7, die den Laserstrahl 12 in Richtung des Mittelpunktes 22 projiziert und damit senkrecht auf die Kunststoffrohre richtet. In der Figur 2, die die entsprechende Schalenteilbacke 11 in Querschnittstarstellung zeigt, ist nur jeweils eine Laserquelle 12 und ein Strahlformungselement 7 sichtbar. Der Figur 3, die die Schalenteilbacke 11 aus Figur 2 in Längsschnittdarstellung visualisiert, ist deutlich zu erkennen, dass eine Anzahl von Laserquellen 12 und Strahlformungselementen 7 kreisförmig um die Durchtrittsöffnung 5 herum angeordnet ist. Dabei sind je eine Laserquelle 12 und ein Strahlformungselement 7 zu einer Einheitszelle 20 zusammengefasst, die in Umfangsrichtung der Schalenteilbacke 3 mehrfach ohne Abstand zueinander angeordnet ist. Die Schalenteilbacke 4 ist entsprechend ausgeführt. Die Anzahl der Laserquellen entsprechen dem Rohrdurchmesser der zu verschweißenden Rohre, wobei in dem Ausführungsbeispiel für ein Rohr mit 2,54 cm zwanzig Einheitszellen 20 verwendet werden. Bei größeren Rohrdurchmessern werden entsprechend dem Umfang mehr Einheitszellen eingesetzt, um die optische Leistung pro Umfang zu erhalten. Dies hat keinen negativen Einfluss auf die Homogenität der Leistungsverteilung auf dem Rohr. Bei kleineren Rohrdurchmesser kann die Brennweite der Single-Emitter-Laserquelle 12 angepasst werden, damit der Platz pro Laserquelle 12 auf einem Kühlkörper groß genug bleibt und die Homogenität nicht durch eine gröbere Aufteilung der Laserquelle 12 auf dem Vollkreis leidet. Bezüglich der erforderlichen Homogenität der Laserleistung über die 360° sollte ein Wert 1,5 % erreicht werden, noch Fertigungstoleranzen zwischen den Single-Emittern-Laserquellen 12 hinzukommen, um einen bei Standard-Linienlasern vorgegebenen Intensitätsschwankung von maximal 7,5 % nicht zu überschreiten. Elektrisch sind in Single-Emitter-Laserquellen 12 in Reihe geschaltet. Jede Schalenteilbacke 3, 4 ist in dem Ausführungsbeispiel aus massivem Kupfer als Träger für die optischen Linsen und die Laserquelle. Die Pufferung der Abwärme vom Schweißen kann in der jeweiligen, aus Kupfer hergestellten Schalenteilbacke 3, 4 erfolgen. Die Kühlung zwischen den Schweißungen geschieht vorzugsweise mittels Peltier-Elementen und Luft. Jede Single-Emitter-Laserquelle 12 wirkt dazu noch als Einzelwärmesenke.

Die Figur 4 zeigt eine andere Ausführungsform des Schalenteils 3 aus Figur 1 in einer simultanen fasergekoppelten Ausführung mit nur einer leistungsstarken abgesetzten Laserquelle 12. Die Schalenteilbacke 11 weist mehrere Strahlformungs- und Strahlumlenkungselemente 7, 8 auf, die den zugeführten Laserstrahl 9 zum einen formen, umlenken und aufteilen und so in Richtung des Mittelpunkt 22 der Durchtrittsöffnung 5 richten und dabei mit Überlappung auf die Rohre projizieren. Von der Laserquelle 12 wird die Laserstrahlung über eine optische Glasfaser 23 zu einer fokussierenden Linse 7', dann auf einen Umlenkspiegel 8' und weiter zu einer Strahl aufweitenden Linse 7", und danach auf einen Strahlteiler 8" geführt. Der aufgeteilte Laserstrahl 12 fällt dann auf zwei Umlenkspiegel 8"', die den jeweiligen Laserstrahl 12 in Richtung der Durchtrittsöffnung 5 reflektieren und die Kunststoffrohre radial mit überlappender Laserstrahlung beaufschlagen. Die optischen Elemente 7', 7" bilden die Strahlformungselemente 7 und die optischen Elemente 8', 8", 8'" die Strahlumlenkungselemente 8 der Schalenteilbacke 11. In dem Ausführungsbeispiel fokussiert die Zylinderlinse 7' in axialer Vorrichtung den runden Strahl aus der Glasfaser 23 zu einer Linie. Mit dieser Zylinderlinse 7' wird somit die Schweißnahtbreite definiert. Die Zylinderlinse 7" dagegen defokussiert die Linie in radialer Richtung (Rohrumfang) und zieht damit Linie auf der erforderlichen Länge auseinander. Mit der Zylinderlinse 7" wird somit die Linienlänge und die Überlappung zwischen den durch die Umlenkspiegel 8'" gebildeten vier Segmenten in der Zusammenwirkung der beiden Schalenteilbacken 11 definiert. Die Schalenteilbacken 11 jedes Schalenteils 3, 4 sind einander entsprechend ausgebildet.

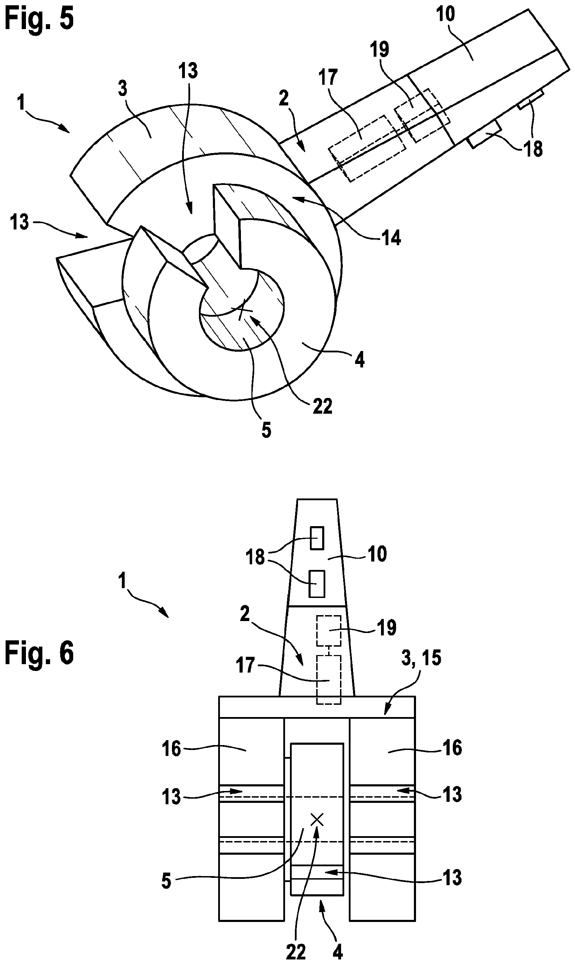

Bei den in der Figur 5, 6 gezeigten Ausführungsformen weist hingegen nur eines der Schalenteile 3, 4 eine laserbasierende Schweißeinrichtung 6 auf, die optische Strahlformungs- und/oder Strahlumlenkungselemente 7, 8 umfasst. Die beiden Schalenteile 3, 4 sind mit je einem Schalenteilmaul 13 ausgebildet. Das Schalenteil 3, das keine laserbasierende Schweißeinrichtung 6 aufweist, ist unbeweglich mit dem Werkzeuggehäuse 2 verbunden und damit auch feststehend gegenüber dem Handgriff 10. Das andere zweite Schalenteil 4 und sein Schalenteilmaul 13 ist gegenüber dem ersten Schalenteil 3 und seinem Schalenteilmaul 13 drehbeweglich angeordnet, wobei die beiden Schalenteilmäuler 13 seitlich nebeneinander angeordnet sind und das zweite Schalenteil 4 und sein Schalenteilmaul 13 gegenüber dem ersten Schalenteil 3 und seinem Schalenteilmaul 13 um mindestens 360° rotierbar ausgebildet ist. Die laserbasierende Schweißeinrichtung 6 des Schalenteils 4 beaufschlagt im geschlossenen Zustand der Schalenteile 3, 4 die nicht abgebildeten Kunststoffrohre mit einem Laserstrahl sequentiell radial.

Bei der in der Figur 5 verbildlichten Variante ist das Schalenteil 3, das keine laserbasierende Schweißeinrichtung 6 aufweist, unbeweglich mit dem Werkzeuggehäuse 2 verbunden und feststehend gegenüber dem Handgriff 10, als Einfachkopf 14 ausgebildet. Dem gegenüber ist bei dem in der Figur 6 bebilderten Ausführungsbeispiel das erste feststehende Schalenteil 3 als Gabelkopf-Schalenteil 15 mit zwei Gabelkopf-Schalenteilsegmenten 16 ausgebildet, die je ein Schalenteilmaul 13 aufweisen, wobei das Gabelkopf-Schalenteil 15 und seine Schalenteilmäuler 13 gegenüber dem Handgriff feststehend sind. Das andere zweite Schalenteil 4 und sein Schalenteilmaul 13 sind zwischen den beiden Gabelkopf-Schalenteilsegmenten16 angeordnet, sodass die drei Schalenteilmäuler 13 sich seitlich versetzt nebeneinander erstrecken.

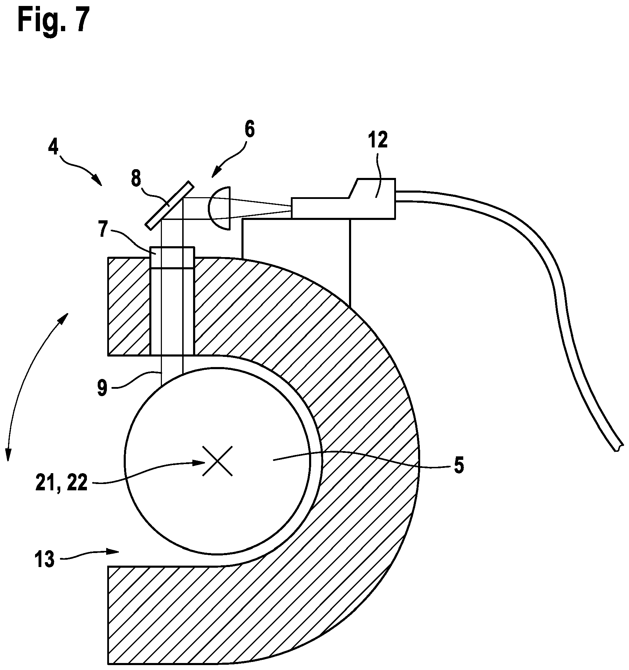

Die Figur 7 zeigt das die Laserquelle 12 und das Strahlformungs- und Strahlumlenkungselement 7, 8 aufweisende Schalenteil 4 aus den Figuren 4 und 5 in Längsschnittdarstellung. An dem drehbar gelagerten Schalenteil 4 ist ein Diodenlaser mit asphärischer Linse (FAC) als Laserquelle 12 angeordnet, Der Laserstrahl 9 wird über einen Spiegel als Strahlumlenkungselement 8 in Richtung einer als Strahlformungselement 7 wirkenden Zylinderlinse mit ca. 10 mm Brennweite umgelenkt, die den Laserstrahl 9 senkrecht auf die Drehachse 21 des Schalenteils 4 gekreuzt zur fast-axis-Richtung fokussiert, die mittig in der Durchtrittsöffnung 5 angeordnet ist. Der Diodenlaser 12 hat eine typische optische Ausgangsleistung von ca. 40 Watt und umfasst ein Array von Laserdioden, die in einem Wellenbereich von etwa 900 bis 1000 Nanometern Laserlicht abstrahlen. Für die Anpassung an die unterschiedliche Kabellänge aufgrund der Drehbewegung sind in dem Werkzeuggehäuse 2 nicht dargestellte der Fachmann geläufige Kabellängenausgleichsmittel angeordnet.

In allen vorstehend beschrieben Ausführungsbeispielen des Handlaserwerkzeuges 1 ist an das Werkzeuggehäuse 2 eine nicht dargestellte Drucklufteinrichtung zur Kühlung der zu verschweißenden Rohre, der Laserquellen und/oder der optischen Elemente anschließbar, wobei im Inneren des Werkzeuggehäuses 2 Leitkanäle und Leitflächen zur Führung der Druckluft zu den zu kühlenden Stellen angeordnet sind. Diese sind von außen nicht sichtbar. Zudem weisen die Handlaserwerkzeuge 1 jeweils eine integrierte Steuer- und Regeleinrichtung 17 in dem Werkzeuggehäuse 2 sowie Betätigungselemente 18 an dem Werkzeuggehäuse 2 auf, die vorzugsweise im bzw. am Handgriff 10 angeordnet sind. Des Weiteren sind im Werkzeuggehäuse 2 des Handlaserwerkzeuges 1 Messeinrichtungen 19 zur Prozesskontrolle angeordnet und mit der Steuer- und Regeleinrichtung 17 verbunden.

## Patentansprüche

1. Handlaserwerkzeug (1) zum miteinander Verschweißen von thermoplastischen Kunststoffrohren, **gekennzeichnet durch,** ein Werkzeuggehäuse (2) mit zwei aneinander gegenüber beweglich festgelegten Schalenteilen (3, 4), die im geöffneten Zustand die zu verschweißenden Kunststoffrohre wenigstens teilweise umgreifend anordenbar sind und im geschlossenen Zustand eine die Kunststoffrohre aufnehmende durch die Schalenteile (3, 4)geformte Durchtrittsöffnung (5) aufweisen, und wenigstens einer im Bereich der Schalenteile (3, 4) angeordneten laserbasierenden Schweißeinrichtung (6), die mindestens ein optisches Strahlformungs- und/oder Strahlumlenkungselement (7, 8) zum Formen bzw. Umlenken von zugeführten Laserstrahlen (9) aufweist, wobei die geformten und/oder umgelenkten Laserstrahlen (9) die zu verschweißenden Kunststoffrohre mit einem vorgebbaren Strahlprofil simultan oder rotierend beaufschlagen, und mindestens einem an dem Werkzeuggehäuse (2) befindlichen Handgriff (10).

2. Handlaserwerkzeug nach Anspruch 1, **dadurch gekennzeichnet, dass** jedes der Schalenteile (3, 4) zumindest eine laserbasierende Schweißeinrichtung (6) aufweist, die gegenüber dem jeweiligen Schalenteil (3, 4) feststehend ausgebildet ist, wobei jede laserbasierende Schweißeinrichtung (6) eine, vorzugsweise mehrere, optische Strahlformungs- und/oder Strahlumlenkungselemente (7, 8) umfasst, die im geschlossenen Zustand der Schalenteile (3, 4)gleichmäßig über den Umfang der Durchtrittsöffnung (5) verteilt angeordnet sind und die die Kunststoffrohre mit je einem Laserstrahl (9) radial beaufschlagen.

3. Handlaserwerkzeug nach Anspruch 1, **dadurch gekennzeichnet, dass** nur eines der Schalenteile (3, 4) eine statische laserbasierende Schweißeinrichtung (6) aufweist, die vorzugsweise optische Strahlformungs- und/oder Strahlumlenkungselemente (7, 8) umfasst, die im geschlossenen Zustand der Schalenteile (3, 4) um die Durchtrittsöffnung (5) rotierbar angeordnet sind und die die Kunststoffrohre mit einem Laserstrahl (9) radial beaufschlagen.

4. Handlaserwerkzeug nach Anspruch 1, 2 oder 3, **dadurch gekennzeichnet, dass** an das Werkzeuggehäuse (2) eine Drucklufteinrichtung zur Kühlung der zu verschweißenden Rohre, der Laserquellen (12) und/oder der optischen Elemente (7, 8) anschließbar ist, und in dem Werkzeuggehäuse (2) Leitkanäle und Leitflächen zur Führung der Druckluft zu den zu kühlenden Stellen angeordnet sind.

5. Handlaserwerkzeug nach einem der vorangegangenen Ansprüche, **gekennzeichnet durch** eine Steuer- und Regeleinrichtung (17) in dem Werkzeuggehäuse (2) sowie Betätigungselemente (18) an dem Werkzeuggehäuse (2), vorzugsweise im Bereich des Handgriffs (10), die angepasst ist, die Schalenteile (3,4) zu schließen, den Schweißvorgang durchzuführen und anschließend die Schalenteile (3, 4) wieder zu öffnen und die verschweißten Kunststoffrohre freizugeben.

6. Handlaserwerkzeug nach Anspruch 5, **dadurch gekennzeichnet, dass** in dem Werkzeuggehäuse (2) Messeinrichtungen (19) zur Prozesskontrolle angeordnet und mit der Steuer- und Regeleinrichtung (17) verbunden sind.

7. Handlaserwerkzeug nach einem der vorangegangenen Ansprüche, **dadurch gekennzeichnet, dass** das mindestens eine, in wenigsten einem der Schalenteile (3, 4) angeordnete Strahlformungs- und/oder Strahlumlenkungselement (7, 8) den jeweils von einer Laserquelle (12) emittierten Laserstrahl (9), vorzugsweise linienförmig, formt und auf die dem jeweiligen Schalenteil (3, 4) zugewandten Flächen der zu verschweißenden Kunststoffrohre ohne oder mit in einem Grenzbereich definierter Überlappung lenkt.

8. Handlaserwerkzeug nach Anspruch 7, **dadurch gekennzeichnet, dass** das mindestens eine Strahlformungs- und/oder Strahlumlenkungselement (7, 8) mit der Laserquelle (12) fasergekoppelt ist.

9. Handlaserwerkzeug nach einem der vorangegangenen Ansprüche 1 bis 8, **dadurch gekennzeichnet, dass** die beiden Schalenteile (3, 4) eine Schalenteilbacke (11) aufweisen, wobei ein erstes Schalenteil (3) und seine Schalenteilbacke (11) gegenüber dem Handgriff (10) feststehend sind und das andere zweite Schalenteil (4) und seine Schalenteilbacke (11) um bis zu vorzugsweise 60 - 90° gegenüber dem ersten Schalenteil (3) und seiner Schalenteilbacke (11) verschwenkbar ausgebildet ist, und wobei die beiden Schalenteilbacken (11) einander diametral gegenüberliegend angeordnet sind.

10. Handlaserwerkzeug nach Anspruch 9, **dadurch gekennzeichnet, dass** an dem ersten und dem zweiten Schalenteil (3, 4), die einander gegenüber verschwenkbar sind, mindestens je zwei Laserquellen (12) sowie mindestens ein zugehöriges Strahlformungs- und/oder Strahlumlenkungselement (7, 8) angeordnet sind, wobei der jeweilige Laserstrahl (9) der Laserquelle (12) zunächst direkt oder fasergekoppelt auf das im Bereich der Schalenteilbacke (11) der Schalenteile (3, 4) angeordnete mindestens eine Strahlformungs- und/oder Strahlumlenkungselement fällt (7, 8) und die Laserstrahlen (9) dann jeweils hinter dem mindestens einen Strahlformungs- und/oder Strahlumlenkungselement (7, 8) auf die Kunststoffrohre mit in einem Grenzbereich definierter Überlappung gerichtet sind.

11. Handlaserwerkzeug nach Anspruch 10, **dadurch gekennzeichnet, dass** die Laserquelle (12) und das mindestens eine zugehörige Strahlformungs- und/oder Strahlumlenkungselement (7, 8) zu einer Einheitszelle (20) zusammengeführt sind, wobei die Einheitszellen (20) in der Umfangsrichtung der Durchtrittsöffnung (5) fortlaufend angeordnet sind.

12. Handlaserwerkzeug nach einem der vorangegangenen Ansprüche 1 bis 8, **dadurch gekennzeichnet, dass** die beiden Schalenteile (3, 4) ein Schalenteilmaul (13) aufweisen, wobei ein erstes Schalenteil (3) und sein Schalenteilmaul (13) gegenüber dem Handgriff (10) feststehend sind und das andere zweite Schalenteil (4) und sein Schalenteilmaul (13) gegenüber dem ersten Schalenteil (3) und seinem Schalenteilmaul (13) drehbeweglich angeordnet ist, wobei die beiden Schalenteilmäuler (13) seitlich nebeneinander angeordnet sind und das zweite Schalenteil (4) und sein Schalenteilmaul (13) gegenüber dem ersten Schalenteil (3) und seinem Schalenteilmaul (13) um mindestens 360° rotierbar ausgebildet ist.

13. Handlaserwerkzeug nach Anspruch 12, **dadurch gekennzeichnet, dass** das erste Schalenteil (3) als Gabelkopf-Schalenteil (15) mit zwei Gabelkopf-Schalenteilsegmenten (16) ausgebildet ist, die je ein Schalenteilmaul (13) aufweisen, wobei das Gabelkopf-Schalenteil (15) und seine Schalenteilmäuler(13) gegenüber dem Handgriff (10) feststehend sind und das andere zweite Schalenteil (4) und sein Schalenteilmaul (13) zwischen den beiden Gabelkopf-Schalenteilsegmenten (16) angeordnet ist, wobei die drei Schalenteilmäuler (13) seitlich versetzt nebeneinander angeordnet.

14. Handlaserwerkzeug nach Anspruch 12 oder 13, **dadurch gekennzeichnet, dass** an dem Schalenteilmaul (13) des zweiten Schalenteils (4), das gegenüber dem ersten Schalenteil (3) rotierbar ist, eine Laserquelle (12) sowie mindestens ein Strahlformungs- und/oder Strahlumlenkungselement (7, 8) angeordnet sind, wobei der Laserstrahl (9) senkrecht auf die Kunststoffrohre gerichtet ist.
